(19) Europäisches Patentamt
European Patent Office
Office européen des brevets

(11) **EP 2 811 140 A1**

(12) **DEMANDE DE BREVET EUROPEEN**

(43) Date de publication:
**10.12.2014 Bulletin 2014/50**

(51) Int Cl.:
*F02D 41/00* [(2006.01)]    *F02M 25/07* [(2006.01)]
*F02D 41/14* [(2006.01)]

(21) Numéro de dépôt: **14305840.2**

(22) Date de dépôt: **03.06.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **03.06.2013 FR 1355045**

(71) Demandeur: **Renault S.A.S.**
**92100 Boulogne-Billancourt (FR)**

(72) Inventeurs:
• **Talon, Vincent**
  **69007 Lyon (FR)**
• **Castillo, Felipe**
  **38000 Grenoble (FR)**
• **Witrant, Emmanuel**
  **38420 Saint Jean Le Vieux (FR)**
• **Dugard, Luc**
  **38400 Saint Martin D'Heres (FR)**

(54) **Système et procédé de détermination de la fraction massique de gaz frais dans le collecteur d'admission d'un moteur à combustion interne de véhicule automobile**

(57)    Système de détermination de la fraction massique de gaz frais dans le collecteur d'admission d'un moteur à combustion interne de véhicule automobile, muni d'un turbocompresseur et d'au moins un circuit de recirculation partielle des gaz d'échappement à basse pression piqué entre la conduite d'échappement et l'entrée du compresseur, le système comprenant :

un soustracteur (12) recevant en entrée une valeur de la fraction massique de gaz frais dans le collecteur d'échappement ainsi qu'une valeur d'un observateur de la fraction massique de gaz frais dans le collecteur d'échappement,

un moyen de détermination (13,14,15,16) du vecteur des dérivées temporelles des variables observées en fonction d'un modèle prédéterminé, un moyen d'intégration (17) du signal reçu du moyen de détermination (13,14,15,16) du vecteur des dérivées temporelles des variables observées, et

un troisième moyen de calcul (18) de la valeur de la fraction massique au niveau du collecteur d'admission en fonction du vecteur des variables observées.

FIG.2

EP 2 811 140 A1

**Description**

L'invention a pour domaine technique la commande d'un moteur à combustion interne, et plus précisément la commande de la quantité d'air frais dans un moteur à combustion interne.

La commande d'un moteur à combustion interne regroupe l'ensemble des techniques de gestion d'un moteur à combustion interne et de l'ensemble de ses capteurs et actionneurs. L'ensemble des lois de contrôle-commande (stratégies logicielles) et des paramètres de caractérisation (calibrations) d'un moteur est contenu dans un calculateur, également appelé unité de contrôle électronique (acronyme UCE).

Aujourd'hui certains moteurs sont équipés de moyens de recirculation partielle des gaz d'échappement (acronyme « EGR » de l'anglais « Exhaust Gaz Recirculation ») vers l'admission afin d'introduire des gaz brûlés dans les cylindres. L'avantage d'introduire cet EGR est de réduire les émissions polluantes d'oxydes d'azote (NOx) lorsque le carburant est du Diesel, et d'augmenter la garde au cliquetis sur les points de forte charge lorsque le carburant est de l'essence.

De façon générale, il existe deux grandes familles de circuits d'EGR. La première famille correspond aux circuits EGR à Haute pression (acronyme HP) pour lesquelles le piquage est directement fait dans le collecteur d'échappement pour être réintroduit dans le collecteur d'admission.

La deuxième famille correspond aux circuits EGR à Basse pression (acronyme BP) pour lesquelles le piquage est réalisé après les systèmes de post traitement pour être réinjecté en amont du compresseur.

Dans le cas de l'EGR BP, les temps de parcours des gaz sont non négligeables ce qui présente un impact très fort sur le contrôle des phases d'admission et de combustion du moteur à combustion interne. Cela se traduit donc par des variations des émissions polluantes et de la consommation en fonction de la prise en compte de ces temps de parcours des EGR BP.

Aujourd'hui, le retard de l'EGR BP n'est généralement pas correctement pris en compte. Lorsqu'il est pris en compte, c'est par l'intermédiaire d'estimateurs purement mathématiques. Les documents suivants traitent de tels estimateurs :

Le document FR2947007 divulgue un système de commande du fonctionnement d'un moteur à combustion interne, comprenant un moyen d'estimation ou de calcul du débit d'air admis dans le moteur à combustion interne à partir de résultats de calculs.

Le document FR2949137 divulgue l'estimation du débit d'air admis dans un moteur de véhicule automobile. Ce second document divulgue un estimateur sans bouclage sur la grandeur mesurée.

De nombreux brevets permettent d'estimer le taux d'EGR dans un moteur. Mais la plupart portent sur des moteurs équipés d'un système EGR HP. Le problème de retard n'est pas pris en compte dans ce type de configuration. Ces brevets ne permettent donc pas de résoudre les problèmes liés au retard dans le cas d'un système d'EGR BP. A titre d'exemple, on peut citer les documents suivants :

Le document FR2915239 divulgue une détermination de taux de recirculation des gaz d'échappement d'un moteur à combustion interne en fonction du débit d'air et de la température en amont des soupapes.

Le document US6035639 divulgue l'estimation du débit massique d'air de moteur turbocompressé comprenant une recirculation de gaz d'échappement.

Le document WO200887515 illustre les connaissances générales du domaine de la conception et le contrôle des moteurs équipés d'EGR HP et d'EGR BP. Ce document ne divulgue que de vagues notions de contrôle et porte plutôt sur la philosophie de gestion de transition entre l'EGR HP et l'EGR BP.

Le document WO2008120553 porte sur le contrôle d'EGR BP. Le contrôle est réalisé grâce à un capteur différentiel de pression aux bornes de la vanne EGR BP.

Le document JP2008208801 divulgue un moyen de commande dans lequel le délai est bien pris en compte, mais uniquement lors du passage du mode EGR HP à BP ou inversement. Le délai est compensé en jouant sur la vanne EGR BP. Il n'y a pas d'estimation du débit d'air et du retard causé par l'utilisation de l'EGR BP.

Il existe donc un besoin pour une détermination de la quantité de gaz frais dans un moteur à combustion interne muni d'un moyen de recirculation partielle des gaz d'échappement (EGR) à basse pression ou d'un double EGR (BP et HP) prenant en compte le temps de parcours de l'EGR basse pression sur la base d'un modèle physique.

Un objet de l'invention est un système de détermination de la fraction massique de gaz frais dans le collecteur d'admission d'un moteur à combustion interne de véhicule automobile, muni d'un turbocompresseur et d'au moins un circuit de recirculation partielle des gaz d'échappement à basse pression piqué entre la conduite d'échappement et l'entrée du compresseur. Le système de détermination comprend un soustracteur recevant en entrée une valeur de la fraction massique de gaz frais dans le collecteur d'échappement ainsi qu'une valeur d'un observateur de la fraction massique de gaz frais dans le collecteur d'échappement, un moyen de détermination du vecteur des dérivées temporelles des variables observées en fonction du signal reçu du soustracteur et d'un modèle prédéterminé, un moyen d'intégration du signal reçu du moyen de détermination du vecteur des dérivées temporelles des variables observées, et un moyen de calcul apte à émettre la valeur de la fraction massique au niveau du collecteur d'admission en fonction du vecteur des variables observées reçu du moyen d'intégration.

Le moyen de détermination du vecteur des dérivées temporelles des variables observées peut comprendre un moyen de détermination du gain de l'observateur recevant en entrée le signal issu du soustracteur, un premier moyen de calcul apte à déterminer une première matrice d'état en fonction du modèle prédéterminé, un deuxième moyen de calcul apte à déterminer une deuxième matrice d'état en fonction du modèle prédéterminé, le premier moyen de calcul et le deuxième moyen de calcul recevant en entrée des mesures, estimations et consignes de paramètres de fonctionnement du moteur à combustion interne, et un sommateur, apte à émettre le vecteur des dérivées temporelles des variables observées en fonction des signaux reçus du moyen de détermination, du premier moyen de calcul et du deuxième moyen de calcul.

Les mesures, estimations et consignes de paramètres de fonctionnement du moteur à combustion interne peuvent comprendre une mesure de la pression dans le collecteur d'admission, une mesure de la température dans le collecteur d'admission, une mesure du débit d'air admis, une mesure de la richesse dans le collecteur d'échappement, une estimation du débit du circuit de recirculation partielle des gaz d'échappement à basse pression, une estimation de la pression en amont du compresseur, une estimation de la température en amont du compresseur et une consigne de débit de carburant.

Le premier moyen de calcul et le deuxième moyen de calcul peuvent être aptes à déterminer des paramètres variant du modèle prédéterminé en fonction des mesures, estimations et consignes de paramètres de fonctionnement du moteur à combustion interne, le premier moyen de calcul et le deuxième moyen de calcul étant également aptes à déterminer respectivement la première matrice d'état et la deuxième matrice d'état en fonction des paramètres variant.

Le moyen d'intégration peut transmettre le vecteur des variables observées au deuxième moyen de calcul ainsi qu'à un moyen de calcul apte à émettre la valeur de l'observateur de la fraction massique de gaz frais dans le collecteur d'échappement à destination du soustracteur.

La fraction massique de gaz frais dans le collecteur d'échappement peut être mesurée par une sonde de richesse ou estimée.

Un autre objet de l'invention est un procédé de détermination de la fraction massique de gaz frais dans le collecteur d'admission d'un moteur à combustion interne de véhicule automobile, muni d'un turbocompresseur et d'au moins un circuit de recirculation partielle des gaz d'échappement à basse pression piqué entre la conduite d'échappement et l'entrée du compresseur. Le procédé comprend les étapes au cours desquelles on détermine l'écart entre une valeur de la fraction massique de gaz frais dans le collecteur d'échappement et une valeur d'un observateur de la fraction massique de gaz frais dans le collecteur d'échappement, on détermine un vecteur des dérivées temporelles des variables observées en fonction de l'écart entre la valeur de la fraction massique de gaz frais dans le collecteur d'échappement et la valeur d'un observateur de la fraction massique de gaz frais dans le collecteur d'échappement et d'un modèle prédéterminé, on intègre un vecteur des dérivées temporelles des variables observées, et on détermine la valeur de la fraction massique au niveau du collecteur d'admission en fonction du vecteur des variables observées.

On peut déterminer le vecteur des dérivées temporelles des variables observées en réalisant les étapes au cours desquelles on détermine le gain de l'observateur en fonction de l'écart entre la valeur de la fraction massique de gaz frais dans le collecteur d'échappement et la valeur d'un observateur de la fraction massique de gaz frais dans le collecteur d'échappement, on détermine une première matrice d'état et une deuxième matrice d'état en fonction du modèle prédéterminé et de mesures, estimations et consignes de paramètres de fonctionnement du moteur à combustion interne, et on détermine le vecteur des dérivées temporelles des variables observées en sommant le gain de l'observateur, la première matrice d'état et la deuxième matrice d'état.

Les mesures, estimations et consignes de paramètres de fonctionnement du moteur à combustion interne peuvent comprendre une mesure de la pression dans le collecteur d'admission, une mesure de la température dans le collecteur d'admission, une mesure du débit d'air admis, une mesure de la richesse dans le collecteur d'échappement, une estimation du débit du circuit de recirculation partielle des gaz d'échappement à basse pression, une estimation de la pression en amont du compresseur, une estimation de la température en amont du compresseur et une consigne de débit de carburant.

On peut déterminer des paramètres variant en fonction des mesures, estimations et consignes de paramètres de fonctionnement du moteur à combustion interne, puis on détermine la première matrice d'état et la deuxième matrice d'état en fonction des paramètres variant.

On peut déterminer la deuxième matrice d'état également en fonction du vecteur des variables observées, et on détermine la valeur de l'observateur de la fraction massique de gaz frais dans le collecteur d'échappement en fonction du vecteur des variables observées.

On peut mesurer ou estimer la fraction massique de gaz frais dans le collecteur d'échappement.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un moteur à combustion interne muni d'un double circuit de recirculation de gaz d'échappement, et
- la figure 2 illustre les principaux éléments d'un système de détermination de la fraction massique de gaz frais dans le collecteur d'admission.

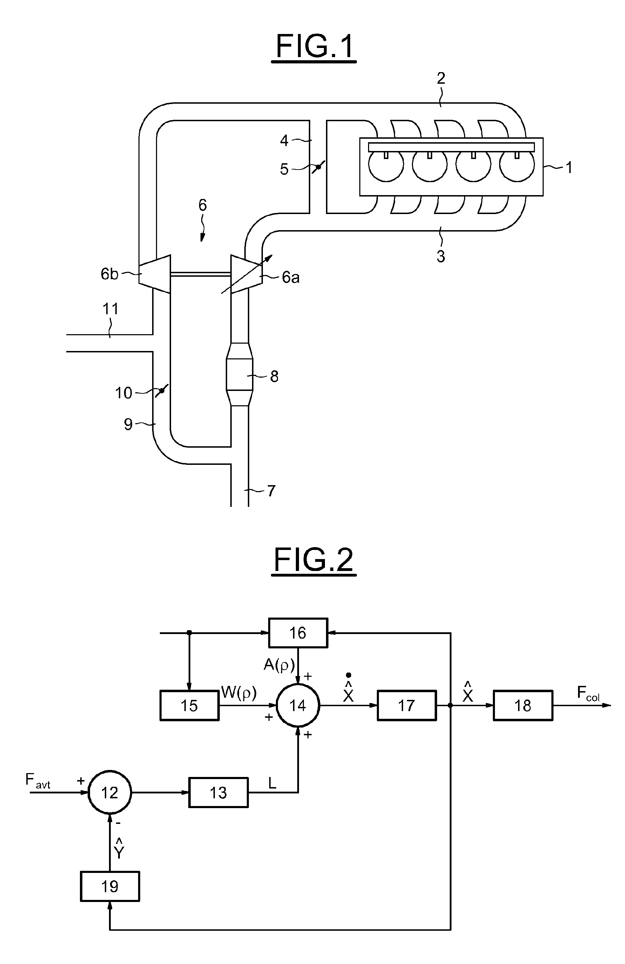

Sur la figure 1, on peut voir un moteur à combustion interne 1 muni d'un collecteur d'admission 2 et d'un collecteur d'échappement 3 reliés ensemble par une conduite de recirculation partielle des gaz d'échappement à haute pression 4, munie d'une vanne, dite à haute pression, référencée 5.

Le collecteur d'échappement 3 est également relié à la turbine 6a d'un turbocompresseur 6. La turbine 6a est par ailleurs reliée à la conduite d'échappement 7, par l'intermédiaire d'un filtre à particules 8. Alternativement, un catalyseur peut également être connecté en sortie ou en entrée du filtre à particules.

La conduite d'échappement 7 est reliée à une conduite de recirculation partielle des gaz d'échappement à basse pression 9, munie d'une vanne, dite à basse pression, référencée 10. La conduite de recirculation partielle des gaz d'échappement à basse pression 9 est reliée à son autre extrémité à la compresseur 6b du turbocompresseur, par l'intermédiaire de la conduite d'admission d'air frais 11.

Comme cela a été décrit en introduction, il est nécessaire de prendre en compte les phénomènes de transport dans un tel système, afin de proposer un estimateur de la fraction massique de gaz frais dans le collecteur d'admission. Il est également intéressant de faciliter la calibration de l'estimateur pour son utilisation industrielle, vis-à-vis de la stabilité de l'observateur, du temps de calcul le plus réduit possible afin de l'embarquer dans un calculateur, et de la flexibilité entre niveau de performance et temps de calcul.

La fraction massique F de gaz frais est variable dans chacun des volumes de la ligne d'admission et d'échappement en fonction de la richesse dans la chambre de combustion, de l'ouverture de la vanne EGR HP 5 et de l'ouverture de la vanne EGR BP 10. On définit alors les fractions massiques de gaz frais dans chacun des volumes à haute pression et à basse pression. Les variables d'état utilisées dans l'observateur sont les suivantes :

$F_{avt}$ : Fraction massique de gaz frais dans le collecteur d'échappement 3
$F_{avc}$ : Fraction massique de gaz frais en amont du compresseur 6b
$F_{col}$ : Fraction massique de gaz frais dans le collecteur d'admission 2

Seule la fraction massique de gaz frais dans le collecteur d'échappement 3 peut être déterminée directement, soit par mesure grâce à une sonde de richesse, soir par un estimateur en fonction, notamment, des différents paramètres de fonctionnement du moteur.

L'évolution de ces trois fractions massiques peut être estimée de manière approchée par les équations suivantes.

$$\dot{F}_{avt} = \frac{R \cdot T_{avt}}{p_{avt} \cdot V_{avt}} \left( Q_B \cdot F_{col} - Q_f \cdot PCO - \left( Q_B + Q_f \right) \cdot F_{avt} \right)$$

$$\dot{F}_{avc} = \frac{R \cdot T_{avc}}{p_{avc} \cdot V_{avc}} \left( Q_{air} \cdot \left( 1 - F_{avc} \right) + Q_{LEGR} \cdot \left( F_{avt} - F_{avc} \right) \right) \qquad (Eq. \ 1)$$

$$\dot{F}_{col} = \frac{R \cdot T_{col}}{p_{col} \cdot V_{col}} \left( Q_{avc} \cdot F_{avc} \cdot \left( t - t_d \right) + Q_{HEGR} \cdot F_{avt} - Q_B \cdot F_{col} \right)$$

et

$$\begin{aligned} Q_{avc} &= Q_{air} + Q_{LEGR} \\ Q_B &= Q_{air} + Q_{LEGR} + Q_{HEGR} = Q_{avc} + Q_{HEGR} \end{aligned} \qquad (Eq. \ 2)$$

Avec :

R = Constante des gaz parfaits (J/K.kg)
T = Température (K)
P = Pression (Pa)
V = Volume (m$^3$)
Q = Débit (Kg/s)
F = Fraction massique de gaz frais
avt = Collecteur d'échappement
avc = amont du compresseur
col = Collecteur d'admission
$Q_{air}$ = Débit d'air traversant le filtre à air (Kg/s)
$Q_{LEGR}$ = Débit EGR BP (Kg/s)
$Q_{HEGR}$ = Débit EGR HP (Kg/s)
$Q_{avc}$ = Débit en amont du compresseur.
$Q_f$ = Débit de carburant (Kg/s)
PCO = Pouvoir comburivore
$t_d$ = Temps de retard entre l'amont du compresseur et le collecteur d'admission.

Ces trois équations sont obtenues en réalisant un bilan de conservation de masse relatif à chacune des fractions massiques $F_{avt}$, $F_{col}$, $F_{avc}$. Un bilan de masse implique de soustraire les débits sortants de masse des débits entrants de masse. Il y a conservation de la masse si la quantité de masse entre l'entrée et la sortie du système reste constante malgré les débits entrants et sortants.

Il est à noter que dans le cas présent, les débits entrants et sortants ne représentent pas les débits totaux, mais uniquement les débits du gaz correspondant à la fraction massique F considérée. On considère ainsi les gaz provenant de l'amont du compresseur 6b, du collecteur d'admission 2 et du collecteur d'échappement 3.

L'équation de fraction massique $F_{col}$ relative au collecteur d'admission 2 fait intervenir un débit de masse en provenance du compresseur 6b correspondant à la somme du débit $Q_{air}$ dans la conduite d'air frais et le débit $Q_{LEGR}$ d'EGR basse pression 9. Ce débit doit suivre un chemin relativement long, qui entraîne le retard $t_d$ que l'on cherche à déterminer.

On peut déterminer une valeur approchée de ce temps de retard $t_d$ en déterminant le temps de transport nécessaire pour remplir le volume entre l'amont du compresseur 6b et le collecteur d'admission 2 avec un débit donné.

On définit la masse m de ce volume de la façon suivante :

$$m = \frac{P \cdot V}{R \cdot T} \qquad (Eq. \ 3)$$

On définit le temps de transport, équivalent au temps de retard $t_d$, dans ce volume de la façon suivante :

$$t_d = \frac{m}{Qm} = \frac{P \cdot V}{R \cdot T \cdot Qm} \qquad (Eq. \ 4)$$

Avec
Qm=débit massique

Toutefois, l'introduction de ce retard dans un calcul embarqué est extrêmement complexe. En effet, le temps de retard $t_d$ n'est pas constant ce qui a pour effet d'introduire une forte non linéarité dans les calculs. Les calculs non linéaires étant très lourds, ils sont donc très longs à résoudre.

Pour éviter une telle situation, on va chercher à linéariser l'expression permettant d'obtenir le temps de retard.

Le retard de $F_{avc}$ dans l'expression de $F_{col}$ est modélisé en appliquant une discrétisation de dimension infinie. Pour cela, on introduit une nouvelle équation $F_i$ dans le système d'équation (Eq. 1). L'équation dynamique de $F_i$ permet de modéliser de façon discrète l'espace compris dans les conduites entre le compresseur 6b et le collecteur d'admission 2. En d'autres termes, l'espace compris entre le compresseur 6b et le collecteur d'admission 2 est découpé en volumes $V_i$ successifs, dans chacun desquels on détermine une fraction massique $F_i$. L'indice i varie ainsi de 1 à N, N étant le nombre total de discrétisations.

On remplace ensuite le temps de retard $t_d$, dans l'expression de la fraction massique $F_{col}$ relative au collecteur d'admission 2, par l'expression approchée suivante :

$$F_{avc} \cdot \left(t - t_d\right) = F_N \qquad\qquad (Eq.5)$$

Cette équation revient à poser que la valeur de la fraction molaire de gaz frais en amont du compresseur est égal à la fraction massique Fi discrétisée pour la valeur dernière valeur i=N.

On pose ensuite comme hypothèse, que dans tous ces volumes de contrôle $V_i$, la fraction massique $F_i$ est différente, mais que les pressions $P_i$ et températures $T_i$ sont identiques et égales respectivement à la pression $P_{col}$ et à la température $T_{col}$ dans le collecteur d'admission.

On pose également comme hypothèse que le débit $Q_{avc}$ en amont du compresseur 6b reste égal à la somme du débit $Q_{air}$ dans la conduite d'admission d'air frais et du débit $Q_{legr}$ de l'EGR basse pression 9.

Cela implique de réécrire les équations (Eq. 1) de fraction massique de la façon suivante :

$$\dot{F}_{avt} = \frac{R \cdot T_{avt}}{p_{avt} \cdot V_{avt}}\left(Q_B \cdot F_{col} - Q_f \cdot PCO - \left(Q_B + Q_f\right) \cdot F_{avt}\right)$$

$$\dot{F}_{avc} = \frac{R \cdot T_{avc}}{p_{avc} \cdot V_{avc}}\left(Q_{air} \cdot \left(1 - F_{avc}\right) + Q_{LEGR} \cdot \left(F_{avt} - F_{avc}\right)\right)$$

$$\dot{F}_i = \frac{R \cdot T_{col}}{p_{col} \cdot V_i}\left(Q_{avc} \cdot \left(F_{i-1} - F_i\right)\right) \qquad\qquad (Eq.6)$$

$$\dot{F}_{col} = \frac{R \cdot T_{col}}{p_{col} \cdot V_{col}}\left(Q_{avc} \cdot F_N + Q_{HEGR} \cdot F_{avt} - Q_B \cdot F_{col}\right)$$

Avec :

$F_i$ : fraction massique discrétisée

$V_i = V_{sural}/N$

$V_{sural}$ : volume entre l'amont du compresseur et le collecteur d'admission

Toutefois, le système d'équation (Eq. 6) demeure non linéaire, et donc difficilement intégrable dans un calculateur embarqué. Pour contourner cette difficulté, la méthode des systèmes linéaires à paramètres variants (acronyme « LPV ») est appliquée. Cette méthode permet d'obtenir une solution approchée d'une équation non linéaire en résolvant un système d'équations linéaires.

Pour cela, on réécrit le système d'équation (Eq. 6)

$$\dot{F}_{avt} = \rho_1 \cdot F_{col} - Q_f \cdot PCO - \left(\rho_1 + \rho_2\right) \cdot F_{avt}$$

$$\dot{F}_{avc} = \rho_4 \cdot \left(1 - F_{avc}\right) + \rho_3 \cdot \left(F_{avt} - F_{avc}\right)$$

$$\dot{F}_i = \rho_5 \cdot \left(F_{i-1} - F_i\right) \qquad\qquad (Eq.\ 7)$$

$$\dot{F}_{col} = \rho_5 \cdot F_N + \rho_6 \cdot F_{avt} - \left(\rho_5 + \rho_6\right) \cdot F_{col}$$

Avec :

$$\rho_1 = \frac{R \cdot T_{avt}}{p_{avt} \cdot V_{avt}} \left( Q_{avc} + Q_{HEGR} \right)$$

$$\rho_2 = \frac{R \cdot T_{avt}}{p_{avt} \cdot V_{avt}} Q_f$$

$$\rho_3 = \frac{R \cdot T_{avc}}{p_{avc} \cdot V_{avc}} Q_{LEGR} \qquad\qquad (Eq.\ 8)$$

$$\rho_4 = \frac{R \cdot T_{avc}}{p_{avc} \cdot V_{avc}} Q_{air}$$

$$\rho_5 = \frac{R \cdot T_{col}}{p_{col} \cdot V_{col}} Q_{avc}$$

$$\rho_6 = \frac{R \cdot T_{col}}{p_{col} \cdot V_{col}} Q_{HEGR}$$

Les valeurs $\rho_1$ à $\rho_6$ sont également des paramètres variant du modèle linéaire.

En tenant compte de la réécriture des équations décrivant le système à l'équation Eq. 7 et des équations Eq. 8, le système peut être modélisé par des équations prenant la forme suivante :

$$\dot{X} = A(\rho) \cdot X + W(\rho)$$
$$Y = C \cdot X \qquad\qquad (Eq.\ 9)$$

Avec :

p : les paramètres variant du modèle linéaire,
X : vecteur des variables d'état,
X : vecteur des dérivées par rapport au temps des variables d'état,
C : la matrice de sortie,
A(p) : première matrice d'état du système, et
W(p) : deuxième matrice d'état du système.

Les variables d'états sont comprises dans le vecteur X suivant :

$$X = \begin{bmatrix} F_{avt} & F_{avc} & F_1 & F2 & \cdots & F_{N-1} & F_N & F_{col} \end{bmatrix}^T \qquad (Eq.\ 10)$$

Les variables d'états correspondent aux fractions massiques dans chacun des volumes de contrôles définis entre l'amont du compresseur 6b et le collecteur d'admission 2.

La variable d'état Fi définie dans les équations Eq. 6 et Eq. 7, prend ici des valeurs discrètes allant de i=1 à i=N.

La matrice de sortie « C » est définie de la façon suivante :

$$C = \begin{bmatrix} 1 & 0 & \cdots & 0 \end{bmatrix} \qquad\qquad (Eq.\ 11)$$

Cette matrice C permet de reconstruire la fraction massique $F_{avt}$ objet de la discrétisation à partir des différentes fractions massiques $F_i$ qui sont aussi, on le rappelle, des variables d'état comprises dans le vecteur X. L'équation Y=CX permet ainsi de faire converger le système, $F_{avt}$ étant la seule valeur du système dont on dispose de la valeur.

Il existe une relation directe entre $F_{avt}$ et le vecteur d'état X. En effet, le premier scalaire du vecteur des variables d'état X n'est autre que la fraction massique $F_{avt}$.

Il est ainsi possible de reformuler l'équation Eq. 9 sous la forme d'un observateur prenant la forme suivante :

$$\dot{\hat{X}} = A(\rho) \cdot \hat{X} + W(\rho) + L(Y - \hat{Y}) \qquad (Eq.\ 12)$$

Avec

L : une matrice de gain

$\dot{\hat{X}}$ = la dérivée temporelle des valeurs de l'observateur pour le vecteur X

$\hat{X}$ = les valeurs de l'observateur pour le vecteur X

$\hat{Y}$ = la valeur de l'observateur pour la valeur de contrôle

Afin de garantir un bon niveau de robustesse de l'observateur, la matrice de gain « L » est choisie de sorte que les conditions suivantes soient respectées sur le polytope défini par les valeurs extrêmes, tant minimales que maximales des paramètres $\rho_1$ à $\rho_6$.

$$A_i^T \cdot P + P \cdot A_i + C^T \cdot Y + Y^T \cdot C + I < 0$$
$$X > W^{1/2} \cdot Y \cdot P^{-1} \cdot Y^T \cdot W^{1/2}$$
$$\min_{P,X,Y} \{Tr(VP) + Tr(X)\} \qquad (Eq.\ 13)$$
$$P > 0$$
$$L = Y \cdot P^{-1}$$

Ce qui est équivalent à la représentation suivante :

$$A_i^T \cdot P + P \cdot A_i + C^T \cdot Y + Y^T \cdot C + I < 0$$
$$\begin{bmatrix} X & W^{1/2} \cdot Y \\ Y^T \cdot W^{1/2} & P \end{bmatrix} > \cdot 0$$
$$\min_{P,X,Y} \{Tr(VP) + Tr(X)\} \qquad (Eq.\ 14)$$
$$P > 0$$
$$L = Y \cdot P^{-1}$$

Avec cet observateur, il est possible d'obtenir une estimation stable de la fraction massique de gaz frais.

La figure 2 illustre un système de détermination de la fraction massique de gaz frais basé sur les équations précédentes.

Un soustracteur 12 reçoit en entrée la valeur de la fraction massique $F_{avt}$ de gaz frais dans le collecteur d'échappement 3, mesurée ou estimée, ainsi que la valeur de l'observateur pour cette même fraction massique $F_{avt}$ par application de l'équation Eq. 9.

Un moyen de détermination 13 du gain de l'observateur reçoit en entrée l'écart entre la valeur mesurée et la valeur de l'observateur de la fraction massique $F_{avt}$. Il détermine la matrice de gain L par application de l'équation Eq. 14 puis le terme $L(Y-\hat{Y})$ de l'équation Eq. 12.

Un premier moyen de calcul 15 détermine la première matrice d'état A(p) en fonction des équations Eq. 7 et Eq. 9, tandis qu'un deuxième moyen de calcul 16 détermine la deuxième matrice d'état W(p) en fonction également des équations Eq. 7 et Eq. 9.

Pour cela, le premier moyen de calcul 15 et le deuxième moyen de calcul 16 reçoivent en entrée la mesure $P_{col}$ de la pression dans le collecteur d'admission, la mesure $T_{col}$ de la température dans le collecteur d'admission, la mesure du débit d'air admis $Q_{air}$, la mesure du débit $Q_{HEGR}$ de l'EGR HP, la mesure $F_{avt}$ de la richesse dans le collecteur d'échappement, l'estimation du débit $Q_{LEGR}$ de l'EGR BP, l'estimation $P_{avc}$ de la pression en amont du compresseur, l'estimation $T_{avc}$ de la température en amont du compresseur et la consigne $Q_f$ de débit de carburant imposée par le contrôle du moteur.

La mesure du débit d'air admis $Q_{air}$ peut être réalisée par exemple par un débitmètre disposé au niveau du filtre à air.

La mesure du débit $Q_{HEGR}$ de l'EGR HP peut être effectuée par différence de pression aux bornes de la vanne EGR HP.

En fonction de ces valeurs, le premier moyen de calcul 15 et le deuxième moyen de calcul 16 déterminent les valeurs $\rho_1$ à $\rho_6$ par application des équations Eq. 8.

Le premier moyen de calcul 15 et le deuxième moyen de calcul 16 déterminent ensuite respectivement les matrices W(p) et A(p) par application des équations Eq. 7 et Eq. 9.

Un sommateur 14 reçoit le terme $L(Y-\hat{Y})$ du moyen de détermination 13, la première matrice d'état A(p) du premier moyen de calcul 15 et la deuxième matrice d'état W(p) du deuxième moyen de calcul 16.

Un moyen d'intégration 17 reçoit du sommateur 14 un vecteur X des dérivées temporelles des variables observées issu de l'équation Eq. 12.

Un troisième moyen de calcul 18 reçoit du moyen d'intégration 17 un vecteur des variables observées $\hat{X}$ et émet en sortie la valeur de la fraction massique $F_{col}$ au niveau du collecteur d'admission par application des équations Eq. 10 et Eq. 12.

Le vecteur des variables observées $\hat{X}$ est également transmis au deuxième moyen de calcul 16 et à un quatrième moyen de calcul 19. Le quatrième moyen de calcul 19 émet la valeur de l'observateur de la fraction massique $F_{avt}$ à destination du soustracteur 12 par application de l'équation Eq. 9.

On peut ainsi estimer la fraction massique $F_{col}$, déduit du vecteur des variables observées X, à partir de la différence entre la mesure et l'estimation de la fraction massique $F_{avt}$ = Y

Le choix du nombre de discrétisations « N » dépend:

- du temps de calcul disponible, car pour chaque augmentation de « N », on introduit une nouvelle équation d'état,
- de la précision souhaitée pour estimer la fraction massique $F_{col}$ en régime transitoire,
- de la robustesse de l'estimation, notamment sur les très forts transitoires avec le risque d'oscillations pour des variations brutales d'entrée (de type créneaux).

Pour l'application décrite, la valeur « N = 3 » semble un bon compromis pour les prestations souhaitées avec les contraintes imposées.

Il est ainsi possible d'estimer correctement la fraction massique de gaz frais (ou brûlés) dans le collecteur d'admission d'un moteur équipé d'un EGR basse pression. Il est notamment possible de prendre en compte le retard des phénomènes de transport dans la ligne d'admission. Cette prise en compte du retard dans l'observateur permet de garantir un bon niveau de prédiction. De plus, le passage par l'approche LPV et la définition de stabilité sur le polytope défini par celui-ci garantit la robustesse de l'observateur. Cela permet d'avoir une estimation même dans les cas critiques de roulage par rapport aux solutions connues.

## Revendications

1. Système de détermination de la fraction massique de gaz frais dans le collecteur d'admission d'un moteur à combustion interne (1) de véhicule automobile, muni d'un turbocompresseur (6) et d'au moins un circuit de recirculation partielle des gaz d'échappement à basse pression (9) piqué entre la conduite d'échappement (7) et l'entrée du compresseur (6b), **caractérisé par le fait qu'**il comprend :

   un soustracteur (12) recevant en entrée une valeur de la fraction massique de gaz frais dans le collecteur d'échappement (3) ainsi qu'une valeur d'un observateur de la fraction massique de gaz frais dans le collecteur d'échappement,
   un moyen de détermination (13,14,15,16) du vecteur des dérivées temporelles des variables observées en fonction du signal reçu du soustracteur (12) et d'un modèle prédéterminé,
   un moyen d'intégration (17) du signal reçu du moyen de détermination (13,14,15,16) du vecteur des dérivées temporelles des variables observées, et
un moyen de calcul (18) apte à émettre la valeur de la fraction massique au niveau du collecteur d'admission en fonction du vecteur des variables observées reçu du moyen d'intégration (17).

2. Système selon la revendication 1, dans lequel le moyen de détermination (13,14,15,16) du vecteur des dérivées temporelles des variables observées comprend un moyen de détermination (13) du gain de l'observateur recevant en entrée le signal issu du soustracteur (12), un premier moyen de calcul (15) apte à déterminer une première matrice d'état en fonction du modèle prédéterminé, un deuxième moyen de calcul (16) apte à déterminer une deuxième matrice d'état en fonction du modèle prédéterminé, le premier moyen de calcul (15) et le deuxième moyen de calcul (16) recevant en entrée des mesures, estimations et consignes de paramètres de fonctionnement du moteur à combustion interne, et un sommateur (14), apte à émettre le vecteur des dérivées temporelles des variables observées en fonction des signaux reçus du moyen de détermination (13), du premier moyen de calcul (15) et du deuxième moyen de calcul (16).

3. Système selon la revendication 2, dans lequel les mesures, estimations et consignes de paramètres de fonctionnement du moteur à combustion interne comprennent une mesure de la pression dans le collecteur d'admission, une mesure de la température dans le collecteur d'admission, une mesure du débit d'air admis, une mesure de la richesse dans le collecteur d'échappement, une estimation du débit du circuit de recirculation partielle des gaz d'échappement à basse pression, une estimation de la pression en amont du compresseur, une estimation de la température en amont du compresseur et une consigne de débit de carburant.

4. Système selon l'une quelconque des revendications 2 ou 3, dans lequel le premier moyen de calcul (15) et le deuxième moyen de calcul (16) sont aptes à déterminer des paramètres variant du modèle prédéterminé en fonction des mesures, estimations et consignes de paramètres de fonctionnement du moteur à combustion interne, le premier moyen de calcul (15) et le deuxième moyen de calcul (16) étant également aptes à déterminer respectivement la première matrice d'état et la deuxième matrice d'état en fonction des paramètres variants.

5. Système selon l'une quelconque des revendications précédentes, dans lequel le moyen d'intégration (17) transmet le vecteur des variables observées au deuxième moyen de calcul (16) ainsi qu'à un moyen de calcul (19) apte à émettre la valeur de l'observateur de la fraction massique de gaz frais dans le collecteur d'échappement à destination du soustracteur (12).

6. Système selon l'une quelconque des revendications précédentes, dans lequel la fraction massique de gaz frais dans le collecteur d'échappement est mesurée par une sonde de richesse ou estimée.

7. Procédé de détermination de la fraction massique de gaz frais dans le collecteur d'admission d'un moteur à combustion interne (1) de véhicule automobile, muni d'un turbocompresseur (6) et d'au moins un circuit de recirculation partielle des gaz d'échappement à basse pression (9) piqué entre la conduite d'échappement (7) et l'entrée du compresseur (6b), **caractérisé par le fait qu'**il comprend les étapes suivantes:

on détermine l'écart entre une valeur de la fraction massique de gaz frais dans le collecteur d'échappement et une valeur d'un observateur de la fraction massique de gaz frais dans le collecteur d'échappement,
on détermine un vecteur des dérivées temporelles des variables observées en fonction de l'écart entre la valeur de la fraction massique de gaz frais dans le collecteur d'échappement et la valeur d'un observateur de la fraction massique de gaz frais dans le collecteur d'échappement et d'un modèle prédéterminé,
on intègre un vecteur des dérivées temporelles des variables observées, et
on détermine la valeur de la fraction massique au niveau du collecteur d'admission en fonction du vecteur des variables observées.

8. Procédé selon la revendication 7, dans lequel on détermine le vecteur des dérivées temporelles des variables observées en réalisant les étapes suivantes :

on détermine le gain de l'observateur en fonction de l'écart entre la valeur de la fraction massique de gaz frais dans le collecteur d'échappement et la valeur d'un observateur de la fraction massique de gaz frais dans le collecteur d'échappement,
on détermine une première matrice d'état et une deuxième matrice d'état en fonction du modèle prédéterminé et de mesures, estimations et consignes de paramètres de fonctionnement du moteur à combustion interne, et
on détermine le vecteur des dérivées temporelles des variables observées en sommant le gain de l'observateur, la première matrice d'état et la deuxième matrice d'état.

9. Procédé selon la revendication 8, dans lequel les mesures, estimations et consignes de paramètres de fonctionnement du moteur à combustion interne comprennent une mesure de la pression dans le collecteur d'admission, une mesure de la température dans le collecteur d'admission, une mesure du débit d'air admis, une mesure de la richesse dans le collecteur d'échappement, une estimation du débit du circuit de recirculation partielle des gaz d'échappement à basse pression, une estimation de la pression en amont du compresseur, une estimation de la température en amont du compresseur et une consigne de débit de carburant.

10. Procédé selon l'une quelconque des revendications 8 ou 9, dans lequel on détermine des paramètres variant en fonction des mesures, estimations et consignes de paramètres de fonctionnement du moteur à combustion interne, puis on détermine la première matrice d'état et la deuxième matrice d'état en fonction des paramètres variant.

11. Procédé selon l'une quelconque des revendications 7 à 10, dans lequel on détermine la deuxième matrice d'état également en fonction du vecteur des variables observées, et on détermine la valeur de l'observateur de la fraction massique de gaz frais dans le collecteur d'échappement en fonction du vecteur des variables observées.

12. Procédé selon l'une quelconque des revendications 7 à 11, dans lequel on mesure ou on estime la fraction massique de gaz frais dans le collecteur d'échappement.

## FIG.1

## FIG.2

Europäisches
Patentamt

European
Patent Office

Office européen
des brevets

**RAPPORT DE RECHERCHE EUROPEENNE**

Numéro de la demande

EP 14 30 5840

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | F Castillo ET AL: "Simultaneous Air Fraction and Low-Pressure EGR Mass Flow Rate Estimation for Diesel Engines", <br><br>, <br>4 février 2013 (2013-02-04), XP055102818, DOI: 10.3182/20130204-3-FR-2033.00070 Extrait de l'Internet: URL:http://www.gipsa-lab.fr/~e.witrant/papers/13_ifacSSSC_castillo.pdf [extrait le 2014-02-18] <br>* page 727, colonne 1, alinéa 3 - colonne 2, alinéa 6; figure 1 * <br>* page 728, colonne 1, alinéa 6; figure 2 * <br>* page 728, colonne 2, alinéa 1 * <br>* page 729, colonne 1 - page 730, colonne 2 * <br>* Equation (25); page 730, colonne 1 * | 1-12 | INV. <br>F02D41/00 <br>F02M25/07 <br><br>ADD. <br>F02D41/14 |
| X | US 7 512 479 B1 (WANG JUNMIN [US]) 31 mars 2009 (2009-03-31) <br>* colonne 2, ligne 47-67; figure 1 * <br>* colonne 4, ligne 3 - colonne 6, ligne 11 * <br>* colonne 6, ligne 46 - colonne 8, ligne 33 * <br>* colonne 11, ligne 39-44 * <br>* colonne 12, ligne 39-54 * <br>-----<br>-/-- | 1-12 | DOMAINES TECHNIQUES RECHERCHES (IPC) <br><br>F02D <br>F02M |

Le présent rapport a été établi pour toutes les revendications

| Lieu de la recherche | Date d'achèvement de la recherche | Examinateur |
|---|---|---|
| La Haye | 24 septembre 2014 | Spicq, Alexandre |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 14 30 5840

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Otto Föllinger: "Regelungstechnik - Einführung in die Methoden und ihre Anwendungen (8. Auflage)", 31 décembre 1994 (1994-12-31), Hüthing, Heidelberg, Germany, XP007922551, ISBN: 3-7785-2336-8 * pages 464-466, alinéa 13.1; figures 13/1-13/3 * * pages 501-503, alinéa 13.7; figures 13/18-13/20 * ----- | 1-12 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 24 septembre 2014 | Spicq, Alexandre |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 30 5840

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-09-2014

| Document brevet cité au rapport de recherche | Date de publication | Membre(s) de la famille de brevet(s) | Date de publication |
|---|---|---|---|
| US 7512479 B1 | 31-03-2009 | AUCUN | |

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2947007
- FR 2949137
- FR 2915239
- US 6035639 A
- WO 200887515 A
- WO 2008120553 A
- JP 2008208801 B